# EUROPEAN PATENT APPLICATION

(11) **EP 1 215 853 A2**
(43) Date of publication of application: **19.06.2002**
(21) Application number: 01126796.0
(22) Date of filing: 09.11.2001
(51) Int. Cl.: H04L 12/56

(54) **Method and wireless device for providing access to wide area network**

(30) Priority: 13.12.2000 US 736723
(71) Applicant: Agilent Technologies, Inc. (a Delaware corporation), Palo Alto, CA 94303 (US)
(72) Inventor: Carlson, Greg, Corvallis, OR 97330 (US); Bledsoe, James Daren, Albany, OR 97321 (US)
(74) Representative: Schoppe, Fritz, Dipl.-Ing.

(57) **Abstract**

A method and system for providing to a non-connected wireless device (114) access to a wide area network (143) through a wireless device (124) having a connection facility (142) (e.g., a wireless connection provider or wireless portal). First, the non-connected wireless device employs a short-range wireless communication link (118, 128) to negotiate with at least one wireless connection provider for connection services. Second, once the non-connected wireless device has selected a particular connection provider, the connection provider provides access to the wide area network resource through the connection facility (142) and measures the usage. Third, the wireless connection provider bills the non-connected wireless device for the provided connection services. Fourth, the non-connected wireless device provides payment information to the wireless connection provider for enabling payment.

## Description

The present invention relates generally to networks, and more particularly, to an ad hoc wide area network access method and system.

### BACKGROUND OF THE INVENTION

With the advent of portable computing devices (e.g., the laptop computer), there is the need for a way to connect to the network (e.g., Ethernet based local area network (LAN)) to perform any number of important functions. For example, one such function is the synchronization of data between the portable device and another device, such as a personal computer (PC) at home or in the office. When a user makes changes to data, such as the addition or modification of an entry in an address book or an appointment in a calendar or the update of a word processing file while "on the road", the user needs to synchronize ("sync") the related data files on the personal computer so that both the PC and the laptop contain the same most up-to-date information.

Another function may be accessing a resource that is connected to the network. Network resources can include a printer connected to the network, a database, an electronic mail server, or a gateway to another network, such as a gateway to the Internet. Consequently, it is important to have an efficient way to access the Internet from a portable computing device (e.g., a laptop computer).

### Accessing the Internet through Fixed Network Access Devices

For example, a wireless Ethernet protocol supports the use of the 802.11 protocol to connect a laptop to a local area network (LAN) so that the laptop can access LAN resources (e.g., a printer connected to the LAN). The LAN typically includes an access device that has an RF transceiver and antenna for communicating with the laptop via a wireless link. The laptop typically has a PCMCIA card that also has an RF transceiver and antenna for communicating with the access device.

Another important network resource may be a wide area network (e.g., the Internet). When the LAN is provided with a LAN to WAN gateway, a user of a portable computer may, for example, connect to the LAN through the 802.11 protocol and access the Internet through the LAN to WAN gateway.

Unfortunately, there are several disadvantages of this prior art connection approach. First, these access devices are relatively costly, and consequently, these access devices are not commonly found in public areas, offices, or business premises. For example, the installation of these access devices is not that common across businesses, and if these devices are found, the devices are typically situated only at a few locations within the premises of a business.

Furthermore, the range of access devices is typically about 30 feet. Consequently, although the access devices provide a user convenient access while the user is on the business premised, when a user leaves the premises, access to the LAN resources is no longer available.

### Accessing the Internet through Cell Phones

Cell phones have become ubiquitous in the current communication age. Unfortunately, there is no current mechanism for allowing a user to use another's cell phone for accessing either a cellular base station or the Internet. It would be desirable for there to be a mechanism whereby connection services can be discovered, negotiated, provided and also billed. Regrettably, there is no current mechanism to use cell phones in this manner. It would also be desirable for there to be a mechanism whereby more than one cell phone can be aggregated to provide a combined bandwidth greater than the bandwidth for a single cell phone.

Furthermore, cell phones are often limited geographically (i.e., the cell phone may only operate in certain zones, areas of coverage that can be limited by city, state or country). A common example of this situation that is very inconvenient for users is that most cell phones that operate in the United States do not operate in foreign countries. Consequently, when one travels outside of the United States, a user must either rent a cell phone that operates in the jurisdiction of interest or do without the convenience of having a cell phone.

It is desirable for there to be a mechanism that uses short range wireless communications to provide access to a cell phone through another cell phone that can operate in the foreign country.

Based on the foregoing, there remains a need for a method and system for providing a wireless device access to a wireless portal that overcomes the disadvantages set forth previously.

### SUMMARY OF THE INVENTION

A method and system for providing to a non-connected wireless device access to at least one wide area network resource (e.g., the Internet) through a wireless device having a connection facility (e.g., a wireless connection provider or wireless portal).

According to one embodiment of the present invention, the non-connected wireless device employs a short-range wireless communication link to negotiate with at least one wireless connection provider for connection services. Second, once the non-connected wireless device has selected a particular connection provider, the connection provider provides access to the wide area network resource through the connection facility and measures the usage. Third, the wireless connection provider bills the non-connected wireless device for the provided connection services. Fourth, the non-connected wireless device provides payment information to the wireless connection provider for enabling payment.

One aspect of the present invention is the provision of a method and system for providing a non-connected wireless device access to at least one wide area network resource through a wireless portal. A wireless device (e.g., a hand-held personal digital assistant (PDA) or a cell phone) uses a wireless portal (or multiple wireless portals) that are within range of the wireless device to access the wide area network resource. In other words, the wireless device uses short-range wireless communications to connect to the wireless portal, which in turn connects the non-connected wireless device to the wide area network resource.

In one embodiment of the present invention, the wireless portal connection mechanism of the present invention is implemented in a wireless device (e.g., a wireless connection provider) with wide area network connection facilities (i.e., a WAN capable device). The connection provider includes a radio transceiver for communicating information with other radio transceivers within a predetermined range from the wireless device. The connection provider also has connection facilities for connecting to a wide area network. The wireless portal connection mechanism has a service provider for providing information regarding availability, speed of connection, and usage cost in response to a service request for connecting a non-connected wireless device to the wide area network by employing the connection facilities. The wireless portal connection mechanism also has a metering module for measuring the length of time of the connection services and a billing module for billing the non-connected wireless device services provided and handling payment information provided by the non-connected wireless device.

In another embodiment of the present invention, the wireless portal connection mechanism of the present invention is implemented in a wireless device without wide area network connection facilities. The wireless device has a radio transceiver for communicating information with other radio transceivers within a predetermined range from the wireless device. The wireless device also has a wireless portal connection mechanism for discovering wireless connection providers that are in range and negotiating access to a wide area network there through. The wireless portal connection mechanism includes a service requester for requesting connection services from connection service providers in the local area. The wireless portal connection mechanism includes a payment module for providing payment information to enable payment for connection services.

### BRIEF DESCRIPTION OF THE DRAWINGS

The present invention is illustrated by way of example, and not by way of limitation, in the figures of the accompanying drawings and in which like reference numerals refer to similar elements.

FIG. 1 is a block diagram illustrating an exemplary wireless environment in which the wireless portal connection mechanism of the present invention can be implemented.

FIG. 2 illustrates in greater detail the wireless portal connection mechanism 140 of FIG. 1.

FIG. 3 is a flowchart illustrating the steps involved in providing connection services in accordance with one embodiment of the present invention.

FIG. 4 is a flowchart illustrating the steps involved in the negotiation for connection services in accordance with one embodiment of the present invention.

FIG. 5 is a flowchart illustrating the steps involved in providing connection services and measuring the duration of the connection services in accordance with one embodiment of the present invention.

### DETAILED DESCRIPTION OF THE PREFERRED EMBODIMENT

A wireless portal connection mechanism for use in a wireless environment is described. In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

One aspect of the present invention is allowing a user of a first wireless device (e.g., a personal digital assistant (PDA) or a cellular phone) to connect to a resource by employing a mobile network access point and enable the mobile network access point to monitor and bill the first wireless device. Preferably, the mobile network access point is a second user's cellular telephone that can be utilized by the first wireless device to connect to a resource (e.g., a cellular phone service or a wide area network, such as the Internet).

Another aspect of the present invention is the use of more than one cellular telephone in range of a short range RF transceiver to download or transmit information (hereinafter referred to as "aggregation of mobile access points").

A further aspect of the present invention is the provision of mechanisms to perform mobile access point discovery, negotiate for connection services, bill and pay for the connection services, provide the network connection services, handle "out-of-range" situations, and handle "termination of service" issues.

A method and system for providing a non-connected wireless device access to a wide area network resource through a wireless portal. A wireless device (e.g., a hand-held personal digital assistant (PDA) or a cell phone) uses a wireless portal (or multiple wireless portals) that are within range of the wireless device. In other words, the wireless device uses short-range wireless communications to connect to the wireless portal.

### Exemplary Wireless Environment

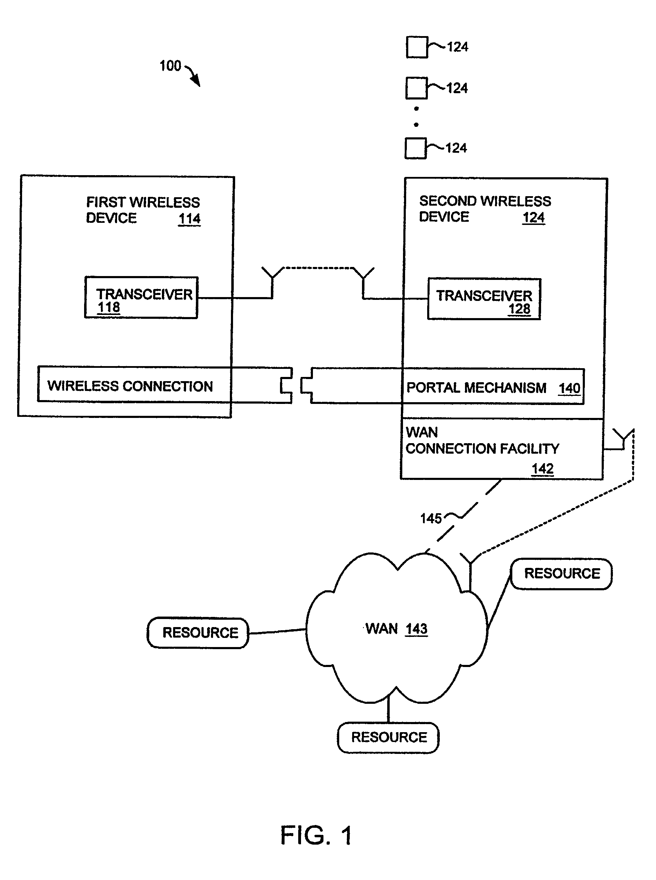

FIG. 1 is a block diagram illustrating an exemplary wireless environment 100 in which the wireless portal connection mechanism 110 of the present invention can be implemented. In this embodiment, the system includes a first wireless device 114 (also referred to herein as a hand held device) that needs connection services (i.e., needs access to at least one wide area network resource, such as the Internet). The first wireless device 114 has a radio transceiver 118 to communicate with other devices that are similarly equipped via a short range wireless link (e.g., a radio frequency (RF) link). The first wireless device can include, but is not limited to, a personal digital assistant (PDA) and a cellular telephone.

The system further includes a second wireless device 124 that has a radio transceiver 128 to communicate with the first wireless device through a personal area network (e.g., a short range wireless link) and connection facilities 142 to access a wide area network 143, such as a the Internet, an intranet, a corporate network, or a resource connected to the wide area network. The connection facilities 142 can employ a wired connection 145 (e.g., a land-based telephone line) or a wireless connection 147 (e.g., a cell telephone wireless connection) to connect to the WAN 143.

The second wireless device 124 is hereinafter also referred to as a "mobile wireless access point", a "wireless portal", or as "mobile wireless connection provider". The transceivers 118, 128 can be any radio frequency (RF) transceivers that comply with a short range wireless protocol (e.g., a Bluetooth wireless protocol). The second wireless device 124 can include, but is not limited to, a cell telephone equipped with a short range radio transceiver, a personal digital assistant, portable computer, or other portable device that has a personal area network and that is WAN enabled.

### Wireless Portal Connection Mechanism 140

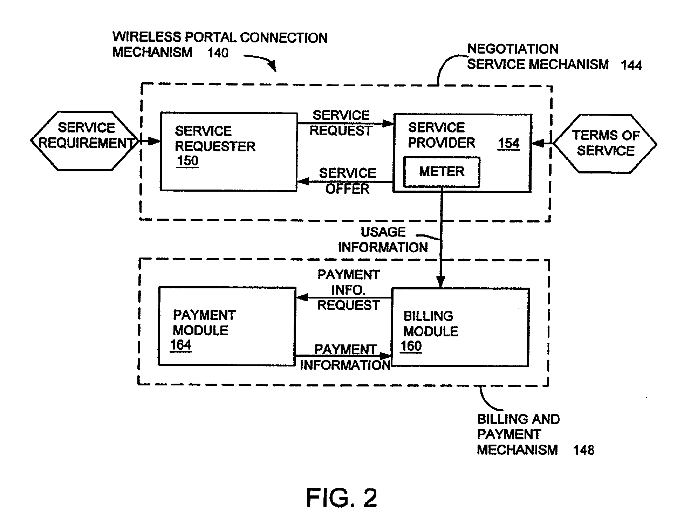

FIG. 2 illustrates in greater detail the wireless portal connection mechanism 140 of FIG. 1. The wireless portal connection mechanism 140 of the present invention includes a negotiation service mechanism 144 for negotiation of services between the first wireless device and the second wireless device and a billing and payment mechanism 148 for handling the billing and payment for connection services.

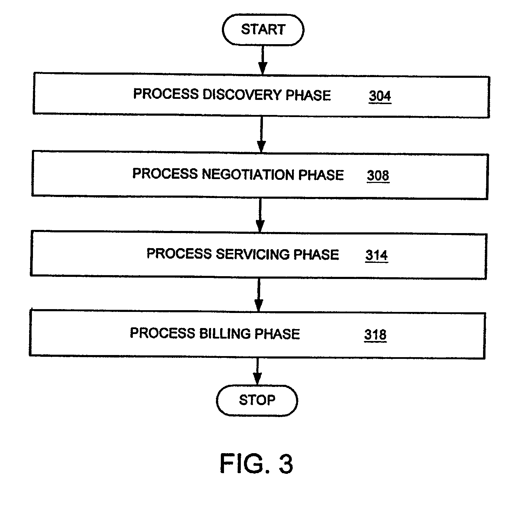

The negotiation service mechanism 144 can include a service requester 150 and a service provider 154 that operate in a complimentary fashion. The service requester 150 sends (e.g., broadcasts) a request for service to connection providers that are in the range of the short-range wireless link (i.e., devices that are in the range of the radio transceiver). In response to the service request, the connection providers reply with a service offer that specifies the terms of service. The terms of service can include, but is not limited to, the availability, cost, and speed of the connection services provided. The negotiation process is described in greater detail hereinafter with reference to FIG. 3.

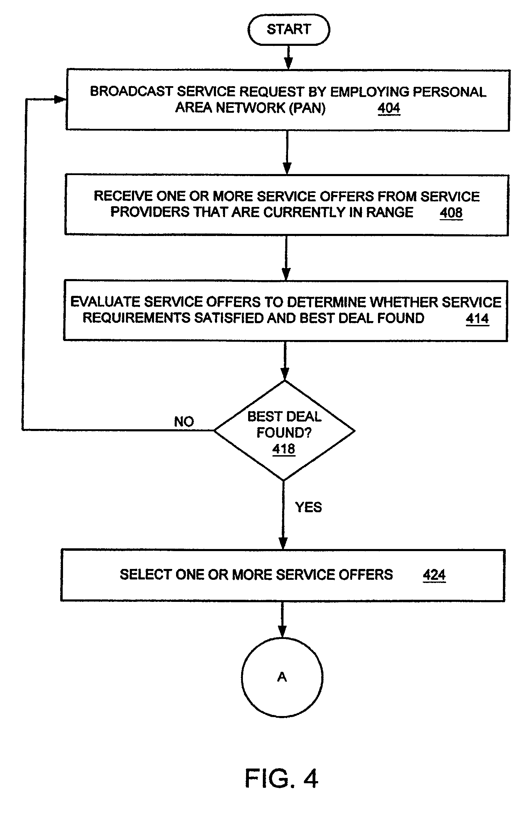

Once the non-connected device has selected a particular connection provider, the connection provider connects the non-connected device to the wide area network resource by employing the connection facilities. A meter is utilized to measure the amount of usage (e.g., the duration in number of minutes of the connection). The provision of connection services and measurement of duration of the services are described in greater detail hereinafter with reference to FIG. 4.

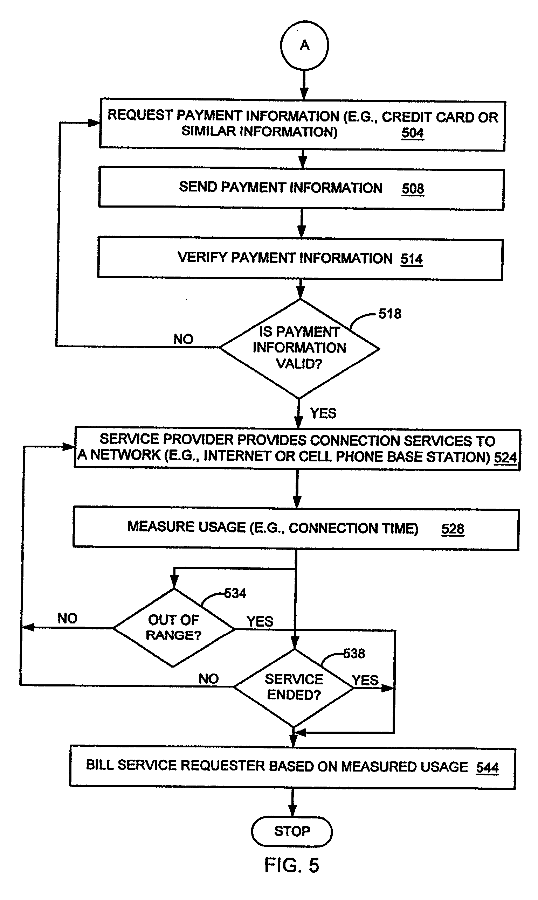

The billing and payment mechanism 148 can include a billing module 160 and a payment module 164 that operate in a complimentary fashion as described in greater detail hereinafter with reference to FIG. 5. The payment module 164 can include payment information of the service requester. The payment information can include, but is not limited to, credit card information, system information module (SIM) that is typically associated with a cell phone service, or information related to other forms of electronic payment.

The billing module 160 sends a bill to the payment module 164 that in turn provides payment information to enable the payment for connection services.

### Overview of System Operation

First, the non-connected wireless device employs a short-range wireless communication link to negotiate with at least one wireless connection provider for connection services. Second, once the non-connected wireless device has selected a particular connection provider, the connection provider provides access to the wide area network resource through the connection facility and measures the usage. Third, the wireless connection provider bills the non-connected wireless device for the provided connection services. Fourth, the non-connected wireless device provides payment information to the wireless connection provider for enabling payment.

### Negotiation for and Selection of Connection Services

FIG. 4 is a flowchart illustrating the steps involved in the negotiation for connection services in accordance with one embodiment of the present invention. In step 404, the first wireless device sends (e.g., broadcast) a service request to all the service providers within range of the RF transceiver. In step 408, one or more service providers respond to the requesting device with service offers. The service offer can specify information that can include, but is not limited to, availability, acceptable forms of payment, cost of service, average speed of connection, guaranteed speed of connection, termination notice (e.g., the length of time between a termination notice and disconnect), etc. It is noted that different negotiation models can be utilized. For example, an auction model can be employed or a quality of service model can be used when a minimum connection parameter (e.g., connection speed) is needed.

In step 414, the first wireless device evaluates the service offers to determine which service offers meets or satisfies its service requirements (e.g., which offers have the desired connection speeds). Also, in step 414, those service offers that meet the service requirements are evaluated to determine which of the offers provides the best deal or price (e.g., the lowest connection charge per minute). In decision block 418, a determination is made whether a "best deal" has been found. A "best deal" can be the service offer, selected from the then available service offers, that provides the greatest connection speed for the lowest cost.

When a "best deal" is found, processing proceeds to step 424 where the service requester selects one or more of the service offers. When a "best deal" is not found, processing proceeds to step 404 where more service offers are requested, received, and evaluated (steps 404, 408, and 414).

Alternatively, the determination for a "best deal" can be made by comparing the terms of each service offer with the parameters prescribed by the user of the first wireless device. For example, if the user has set the connection charge at a maximum of 10 cents per minute, and the lowest service offer is for 15 cents a minute, the processing proceeds to step 404 to continue to look for a service offer meeting the requirements of the user.

It is noted that even after a "best deal" has been found, steps 404 to 414 can be repeated to find a better deal. Since the mobile access points are constantly moving in range and out of range, there is a good possibility that new mobile access points having better terms of service have moved within range of the first wireless device since a previous determination of step 418.

In step 424, the requesting device selects one of the service offers and schedules a time for access or connection.

### Providing Connection Services and Measuring Duration of Services

FIG. 5 is a flowchart illustrating the steps involved in providing connection services and measuring the duration of the connection services in accordance with one embodiment of the present invention.

### Billing and Payment Processing

One aspect of the present invention is to provide a mechanism for billing and payment for connection services. By providing this billing and payment system, the present invention allows the owner of the second wireless device (e.g., a cell phone acting as a mobile access point) can cover the per minute connection charge of the owner's service and defray some of the costs associated with cellular connection service (e.g., monthly cellular phone service charges). The billing and payment processing are described with reference to steps 504 to 518 and step 544. Steps 504, 508 and 514 can be viewed as part of the billing phase 318 where payment information is received and verified.

In step 504, the service provider sends a request for payment information (e.g., a credit card number or a SIM) to the first wireless device. In step 508, the first wireless device sends the requested payment information. In step 514, the service provider verifies the payment information (e.g., checks whether there payment information is valid, whether the account is in good standing, whether the account has a sufficient credit line to cover the anticipated costs of connection, etc.).

In decision block 518, a determination is made whether the payment information is valid. When the payment information is not valid, processing proceeds to step 504 to repeat the request, send, and verify steps. When the payment information is valid, processing proceeds to step 524, where the servicing phase begins.

In step 524, the service provider connects the first wireless device to a resource (e.g., a wide area network or cellular phone base station) by employing the connection facilities. In step 528, the meter measures usage (e.g., the connection time) for billing purposes.

In step 534, a determination is made whether the first wireless device and the second wireless device that acts as the mobile access point have moved out of range with respect to each other. As noted previously, the short-range transceivers have a range of about 15 to 20 feet. Furthermore, since both the first and second wireless devices are mobile, the first wireless device can move out of range of a stationary second wireless device, the second wireless device can move out of range of a stationary first wireless device, or the first wireless device and the second wireless device can move away from each other out of the range of the transceivers. When the first wireless device and the second wireless device are out of range, processing proceeds to step 544 where the service provider bills the first wireless device by using the previously obtained payment information and the measured usage. When the first wireless device and the second wireless device are still in range of each other, processing proceeds to step 524 where connection services continue to be provided.

In step 538, a determination is made whether the service has been ended or terminated. Either the first wireless device or and second wireless device can end the services. For example, the first wireless device may have found a better deal from another wireless device that has recently moved within range and terminate the services. Alternatively, the second wireless device may terminate services to allow the user of the second wireless device to receive a call, make a call, or service another wireless device that is willing to pay more for connection time. When the service is terminated by either the first wireless device or the second wireless device, processing proceeds to step 544. Otherwise, when the service is not terminated by either the first wireless device or the second wireless device, processing proceeds to step 524 where connection services continue to be provided.

Referring to FIG. 3, it is noted that the service requester 150 determines whether there are wireless service providers (e.g., devices 124) that are in range of the first wireless device 114 in the discovery phase 304. In the negotiation phase 308, the first wireless device 114 and the second wireless device 124 employ the service requester 150 and the service provider 154, respectively, to negotiate terms of service. In the servicing phase 304, the service provider 154 provides connection services and monitors usage by employing a meter, for example. As described previously, payment for connection services is handled in the billing phase 318.

In the foregoing specification, the invention has been described with reference to specific embodiments thereof. It will, however, be evident that various modifications and changes may be made thereto without departing from the broader scope of the invention. The specification and drawings are, accordingly, to be regarded in an illustrative rather than a restrictive sense.

## Claims

1. A method for providing a non-connected wireless device (114) access to a wide area network (143) comprising:
a) connecting the non-connected wireless device to at least one wireless connection provider by employing a short-range wireless communication link (118, 128); wherein the wireless connection provider include a connection facility (142); and
b) providing the non-connected wireless device access to the wide are network by employing the connection facility.

2. The method of claim 1 wherein the step of connecting the non-connected wireless device to at least one wireless connection provider by employing a short-range wireless communication link further includes the steps of:
a1) the non-connected wireless device discovering at least one wireless connection provider in range of the short-range wireless communication link;
a2) determining whether at least one wireless connection provider is found;
a3) when no wireless connection provider is found, notifying the user of the non-connected wireless device; and
a4) when a wireless connection provider is found, negotiating the terms of connection services with the wireless connection provider.

3. The method of claim 2 wherein the step of connecting the non-connected wireless device to at least one wireless connection provider by employing a short range wireless communication link further includes the steps of:
a5) determining whether the negotiation between the non-connected wireless device and the wireless connection provider is successful;
a6) when negotiation is successful, the wireless connection provider providing services to the non-connected wireless device according to the negotiated terms; and
a7) when negotiation is not successful, the non-connected wireless device continuing to discover wireless connection providers in range of the short-range wireless communication link.

4. The method of claim 1 further comprising the steps of:
c) the wireless connection provider billing the non-connected wireless device for provided connection services; and
d) the non-connected wireless device paying the wireless connection provider for the connection services.

5. The method of claim 2 wherein the step of negotiating further comprises the steps of:
a4_1) the non-connected wireless device sending a request for connection that specifies the terms related to the connection services;
a4_2) the wireless connection provider receiving the request for connection;
a4_3) determining whether the connected device can provide connection services under the terms provided by the non-connected wireless device;
a4_4) when it is determined that the wireless connection provider can satisfy the terms of connection services, sending a reply to the non-connected wireless device specifying the connection service fee; and
a4_5) connecting the non-connected wireless device to the wide area network through the connection facilities of the wireless connection provider when the wireless connection provided is selected by the non-connected wireless device.

6. The method of claim 1 wherein the step of connecting the non-connected wireless device to at least one wireless connection provider by employing a short-range wireless communication link includes
a1) employing a personal area network to connect the non-connected wireless device to the wireless connection provider.

7. The method of claim 1 wherein the step of connecting the non-connected wireless device to at least one wireless connection provider by employing a short-range wireless communication link includes
a1) employing at least one pair of short-range radio frequency (RF) transceivers to connect the non-connected wireless device to the wireless connection provider.

8. A wireless device comprising:
a) a radio transceiver (118) for communicating information with other radio transceivers within a predetermined range from the wireless device;
b) connection facilities (143) for connecting to a wide area network; and
c) a wireless portal connection mechanism (140) for providing access to the connection facilities; wherein the wireless portal connection mechanism includes a service provider for providing information regarding terms of service in response to a service request for connection services and for connecting a non-connected wireless device to the wide area network by employing the connection facilities.

9. The wireless device of claim 8 further comprising:
d) a metering module for measuring the length of time of the connection services.

10. The wireless device of claim 8 further comprising:
e) a billing module for billing the non-connected wireless device for connection services and handling payment information provided by the non-connected wireless device.
